# EUROPEAN PATENT SPECIFICATION

(11) **EP 0 954 188 B1**
(45) Date of publication and mention of the grant of the patent: **04.07.2007**
(21) Application number: 99250138.7
(22) Date of filing: 27.04.1999
(51) Int. Cl.: H04Q 7/20, H04Q 7/32, H04Q 7/30

(54) **Final digit detection of a telephone number**
Detection der letzten Ziffer einer Telefonnummer
Détection du chiffre final d'un numéro de téléphone

(30) Priority: 28.04.1998 JP 11948598
(43) Date of publication of application: 03.11.1999
(73) Proprietor: NEC CORPORATION, Tokyo (JP)
(72) Inventor: Sonetaka, Noriyoshi, Tokyo (JP)
(74) Representative: Wenzel & Kalkoff

(56) References cited:
- US-A- 4 922 517
- US-A- 4 959 851

## Description

### BACKGROUND OF THE INVENTION

### 1. Field of the Invention:

The present invention relates to a radio access system having a subscriber terminal, a base station connectable to the subscriber terminal via a radio link, a base station control station for controlling the base station, and an exchange accommodating a telephone set and connected to the base station control station.

### 2. Description of the Related Art:

Heretofore, telephone systems based on radio communications, such as portable telephone systems, transmit off-hook and dialing signals according to a predetermined signal sequence to base stations.

One such telephone system is disclosed in Japanese laid-open patent publication No. 63-78643.

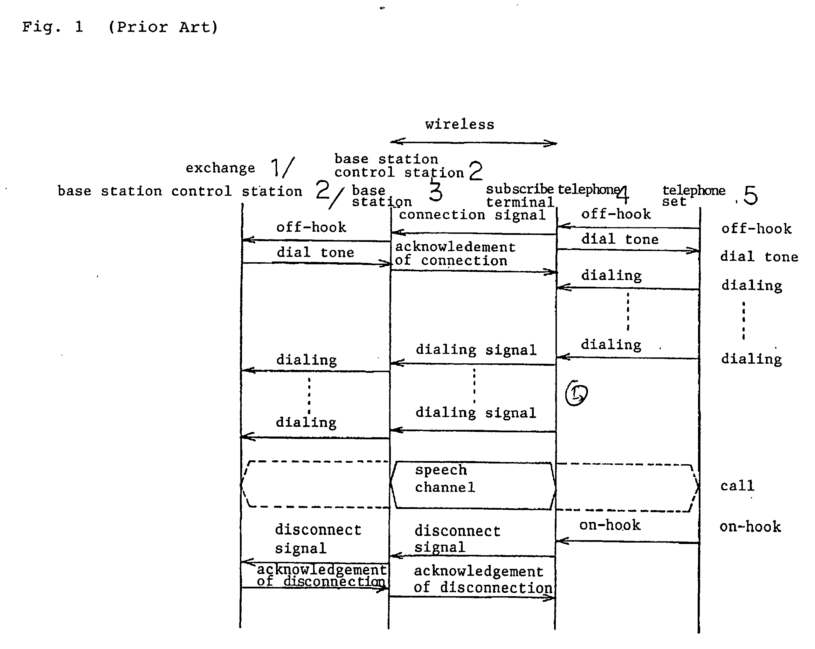

An operation sequence of the disclosed telephone system will be described below with reference to Fig. 1 of the accompanying drawings. As shown in Fig. 1, when the handset of a telephone set 5 is removed from its switch (off-hook state), a subscriber terminal 4 transmits a false dial tone (DT) to the telephone set 5. At the same time, the subscriber terminal 4 operates on a base station 3 or a base station control station 2 to establish a radio link between the subscriber terminal 4 and the base station 3 (or the base station control station 2). The subscriber terminal 4 also decides whether keys of the dial or push-button pad on the telephone set are pushed to dial a telephone number and whether a dialing signal from the telephone set 5 represents a final digit of the dialed telephone number. If the radio link has been established and the dialing signal represents the final digit, the subscriber terminal 4 sends dialing information to the base station 3 (or the base station control station 2). The disclosed telephone system is silent as to a specific process for determining the final digit. The base station 3 (or the base station control station 2) converts the received dialing information to a dialing signal (PB or DP), which is supplied to an exchange 1 that operates to call the destination party.

Portable telephone systems employ an inter-digit timer for measuring an inter-digit pause. A final digit of the dialed telephone number is determined when no dialing signal comes in as detected by the inter-digit timer.

In the telephone system disclosed in Japanese laid-open patent publication No. 63-78643, the subscriber terminal has a circuit for deciding whether a dialing signal from the telephone set represents a final digit of the dialed telephone number, and a means for transmitting dialing signals altogether which have been generated when keys of the dial pad are pushed.

However, the conventional telephone system suffers the following problems:
1) A long period of time is required after the subscriber has pushed keys of the dial pad until a final digit of the dialed telephone number is determined.
2) A long period of time is required after the final digit has been determined until the subscriber is able to talk to the called party.
3) If the inter-digit timer is set to too short a period of time, then the dialing information is transmitted to the base station while the subscriber is dialing the telephone number, tending to result in a connection failure or error.
4) If the inter-digit timer is set to too long a period of time, then a connection failure or error is also liable to occur.

### SUMMARY OF THE INVENTION

It is an object of the present invention to provide a radio access system which can solve the problem of a delay caused by the outbound transmission of dialing signals, which is inherent in a portable telephone system.

A radio access system according to the present invention has a telephone set, a subscriber terminal connected to said telephone set, a base station connectable to the subscriber terminal via a radio link, a base station control station for controlling the base station, and an exchange of a telephone system connected to the base station control station. The subscriber terminal detects when the telephone set is in an off-hook state, sends a dial tone to the telephone set, establishes a radio link between the subscriber terminal and the base station or the base station control station, thereafter receives dialing signals, which are generated when keys of a dial pad on the telephone set are pushed to dial a telephone number, sends a dialing signal to the base station or the base station control station each time a key of the dial pad on the phone set is pushed, to dial a telephone number. Either the base station or the subscriber terminal has a means for deciding whether a dialing signal represents a final digit of the dialed telephone number or not.

Since either the base station or the subscriber terminal has a means for deciding whether a dialing signal represents a final digit of the dialed telephone number or not, the radio access system is capable of solving the problem of a delay caused by the outbound transmission of dialing signals, which is inherent in a portable telephone system.

The radio access system can provide radio service between the base station and the subscriber's home, and hence is advantageous from the standpoint of subscriber equipment installation, maintenance, and early operational capability.

The above means may comprise an inter-digit timer and means for determining that a dialing signal represents a final digit of the dialed telephone number if a key of the dial pad has not been pushed for a predetermined period of time.

The above means may also comprise means for counting dialing signals sent from the telephone set.

The above and other objects, features, and advantages of the present invention will become apparent from the following description when taken in conjunction with the accompanying drawings which illustrate some preferred embodiments of the present invention by way of example.

### BRIEF DESCRIPTION OF THE DRAWINGS

Fig. 1 is a diagram showing an operation sequence of a conventional telephone system;
Fig. 2 is a block diagram of a radio access system according to the present invention;
Fig. 3 is a diagram showing an operation sequence of the radio access system shown in Fig. 2; and
Fig. 4 is a diagram showing another operation sequence of the radio access system shown in Fig. 2.

### DESCRIPTION OF THE PREFERRED EMBODIMENTS

Referring now to Fig. 2, there is shown a radio access system according to the present invention which comprises an exchange 1, a base station control station 2, a plurality of base stations 3, a plurality of subscriber terminals 4, and a plurality of telephone sets 5.

The base stations 3 are connected to the base station control station 2 by cables 202 including optical fibers. Each of the base stations 3 which are connected to the base station control station 2 by radio signals comprises antennas 301, 302, a sending and receiving circuit 310 for receiving radio signals from the base station control station 2 and sending radio signals to the base station control station 2, a converting circuit 313 for converting signals to radio signals for transmission to the subscriber terminals 4, and a converting circuit 311 for converting signals from the base station control station 2 and the subscriber terminals 4 to radio signals. The base station control station 2 has an antenna 201 for sending and receiving radio signals. Each of the base stations 3 which are connected to the base station control station 2 by the cables 202 has the antenna 302, the converting circuit 313, and a converting circuit 312, which is similar to the converting circuit 311, for converting signals to radio signals.

Each of the subscriber terminals 4 comprises an antenna 401 for sending radio signals to the base stations 3 and receiving radio signals from the base stations 3, a converting circuit 410 for converting signals to radio signals, and a telephone set interface converting circuit 411 for receiving radio signals. The telephone set interface converting circuit 411 can be connected to one of the telephone sets 5. The subscriber terminals 4 include a telephone set interface converting circuit 412, similar to the telephone set interface converting circuit 411, which can accommodate a plurality of telephone sets 5.

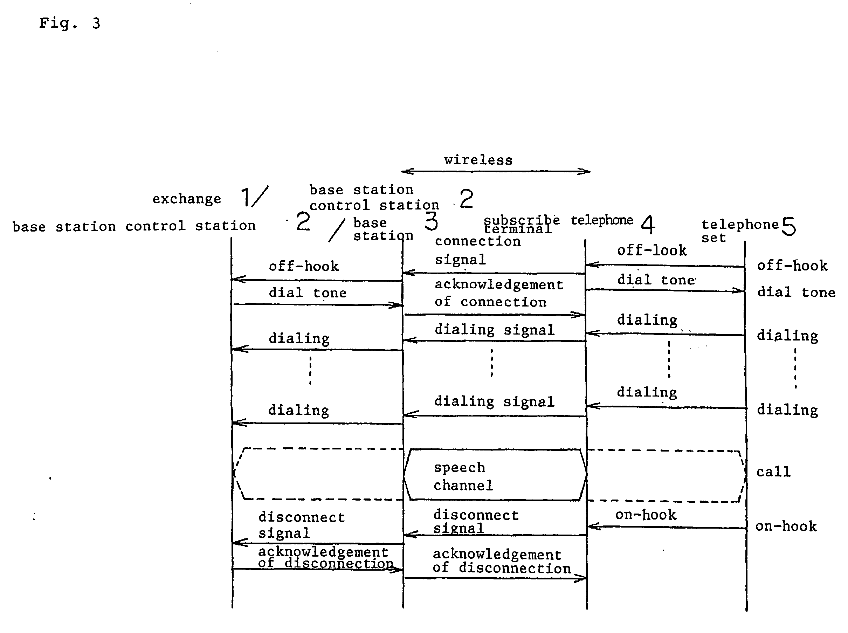

Operation of the radio access system shown in Fig. 2 will be described below with reference to Fig. 3.

When a subscriber removes the handset of the telephone set 5 from its switch (off-hook state), the corresponding subscriber terminal 4 detects the off-hook state, and sends a false dial tone (DT) to the telephone set 5. At the same time, the subscriber terminal 4 operates on a base station 3 or a base station control station 2 to establish a radio link between the subscriber terminal 4 and the base station 3 (or the base station control station 2). The subscriber terminal 4 then sends a dialing signal (PB or PD), produced each time a key of the dial pad on the telephone set 5 is pushed to dial a telephone number, to the base station 3 (or the base station control station 2). The base station 3 decides whether a dialing signal represents a final digit of the dialed telephone number or not. If a dialing signal represents a final digit of the dialed telephone number, then the base station 3 opens an inbound communication link. The dialing signals are transmitted as outbound signals.

The base station 3 decides whether a dialing signal represents a final digit of the dialed telephone number by either:
1) using an inter-digit timer connected to the base station 3 and determining a final digit of the dialed telephone number if a key of the dial pad has not been pushed for a predetermined period of time, as measured by the inter-digit timer or
2) counting digits of the dialed telephone number.

When the subscriber places the handset of the telephone set 5 on its switch (on-hook state), the subscriber terminal 4 detects the on-hook state, and breaks the radio link between the base station 3 (or the base station control station 2) and the subscriber terminal 4.

Fig. 4 shows another operation sequence of the radio access system shown in Fig. 2. According to the operation sequence shown in Fig. 4, the telephone set 5 sends a dialing signal representing a first digit of the dialed telephone number to the subscriber terminal 4 before the acknowledgment of a connection is sent from the base station control station 2 to the subscriber terminal 4.

The radio access system shown in Fig. 2 may be modified as follows:
1) The exchange 1 and the base station control station 2 may be connected by radio links or cables.
2) The exchange 1 may be connected directly to ordinary telephone sets 5 on a ground network or may be connected to a private branch exchange (PBX) on a ground network which is equivalent to the exchange 1.
3) The base station control station 2 and the base station 3 may be connected to each other by radio links, optical fibers, metal cables, or any other mediums capable of transmitting signals for communications.
4) The base station control station 2 and the base station 3 may be connected to each other in a point-to-point or point-to-multipoint access configuration.
5) The base station 3 and the subscriber terminals 4 are connected to each other by radio links. On the basis of a point-to-multipoint (or point-to-point) multiplex system, signals to be transmitted between the base station 3 and the subscriber terminals 4 may be multiplexed by TDMA (Time-Division Multiple Access), FDMA (Frequency-Division Multiplex Access), CDMA (Code-Division Multiplex Access), or the like.
6) A radio access system between the base station 3 and the subscriber terminals 4 may be GSM (Global System for Mobile Communication), AMPS (Advanced Mobile Phone Service), PDC (Personal Digital Cellular), PCS (Personal Communication System), DECT (Digital European Cordless Telephone), PHS (Personal Handyphone System), or the like.
7) One or more subscriber terminals 4 and one or more telephone sets (5) may be connected.

The operation sequences shown in Figs. 3 and 4 may be modified as follows:
1) When the handset of a telephone set 5 is removed from its switch and keys of the dial pad are pushed while the base station 3 (or the base station control station 2) and the subscriber terminal 4 are performing a control process to establish a link, the subscriber terminal 4 may temporarily store a set of dialing signals, and then send the stored dialing signals after the link has been established (see Fig. 4).
2) The base station 3 which has received a dialing signal has a function to convert the dialing signal to a PB or PD dialing signal. This converting function may be performed by the base station control station 2.
3) The value of the inter-digit timer connected to the base station 3 (or the base station control station 2) may be made variable.
4) The number of digits counted by the base station 3 (or the base station control station 2) may be made variable. Specifically, the number of digits is "10" if a dialed telephone number is "03-1234-1567", for example, and the inter-digit timer is actuated when the number of digits reaches "10" at the time the key "7" of the dial pad is pushed. If a dialed telephone number is an overseas telephone number of "001-81-3-1234-1567", for example, then the inter-digit timer is actuated when the number of digits reaches "14" at the time the key "7" of the dial pad is pushed. The number of digits is counted in a different manner from carrier to carrier, and may be counted to suit individual applications.
5) The inter-digit timer and the function to count the number of digit may be provided in each of the subscriber terminals 4.
6) There may be employed a means for sending a busy tone (BT) or a means for sending an arbitrary tone such as a howler tone (HWT) with an arbitrary setting unless a key of the dial pad is pushed for a certain period of time (which may be arbitrarily set) after a dial tone has been sent from the subscriber terminal 4.

Although certain preferred embodiments of the present invention have been shown and described in detail, it should be understood that various changes and modifications may be made therein without departing from the scope of the appended claims.

## Claims

1. A radio access system comprising:
a telephone set (5);
a subscriber terminal (4), connected to said telephone set (5);
a base station (3) connectable to said subscriber terminal (4) via a radio link;
a base station control station (2) for controlling said base station (3); and
an exchange (1) of a telephone system connected to said base station control station (2);
**characterized in that** when said subscriber terminal (4) detects that the telephone set (5) is in an off-hook state, said subscriber terminal is arranged to send a dial tone to the telephone set (5), establishe a radio link between said subscriber terminal (4) and said base station (3) or said base station control station (2), to thereafter receive dialing signals, which are generated when keys of a dial pad on the telephone set (5) are pushed to dial a telephone number, and to send a dialing signal to said base station (3) or said base station control station (2) each time a key of the dial pad on the telephone set (5) is pushed, to dial a telephone number;
said base station (3) or said subscriber terminal (4) having means for deciding whether a dialing signal represents a final digit of the dialed telephone number or not.

2. A radio access system according to claim 1, wherein said means comprises an inter-digit timer (500) and means for determining that a dialing signal represents a final digit of the dialed number if a key of the dial pad has not been pushed for a predetermined period of time.

3. A radio access system according to claim 1, wherein said means comprises means for counting dialing signals sent from said telephone set (5).

4. A radio access system according to claims 1 to 3, wherein said base station (3) comprises means for opening an inbound communication link between the base station (3) and said subscriber terminal (4) if a dialing signal represents a final digit of the dialed telephone number.

## Patentansprüche

1. Funkverbindungssystem umfassend:
einen Telefonapparat (5);
einen Teilnehmeranschluss (4), der mit dem Telefonapparat (5) verbunden ist;
eine Basisstation (3), die über eine Funkverbindung mit dem Teilnehmeranschluss (4) verbindbar ist;
eine Basisstationsteuerstation (2) zum Steuern der Basisstation (3); und
eine Vermittlungsstelle (1) eines Telefonsystems, die mit der Basisstationsteuerstation (2) verbunden ist;
**dadurch gekennzeichnet, dass**, wenn der Teilnehmeranschluss (4) erkennt, dass sich der Telefonapparat (5) in einem abgehobenen Zustand befindet, der Teilnehmeranschluss angeordnet ist, um einen Wählton an den Telefonapparat (5) zu senden, eine Funkverbindung zwischen dem Teilnehmeranschluss (4) und der Basisstation (3) oder der Basisstationsteuerstation (2) herzustellen, danach Wählsignale zu empfangen, die erzeugt werden, wenn Tasten eines Wählfeldes auf dem Telefonapparat (5) gedrückt werden, um eine Telefonnummer zu wählen, und jedes Mal, wenn eine Taste des Wählfelds auf dem Telefonapparat (5) gedrückt wird, um eine Telefonnummer zu wählen, ein Wählsignal an die Basisstation (3) oder die Basisstationsteuerstation (2) zu senden;
wobei die Basisstation oder der Teilnehmeranschluss (4) Mittel aufweisen, um zu entscheiden, ob ein Wählsignal eine Endziffer der gewählten Telefonnummer wiedergibt oder nicht.

2. Funkverbindungssystem nach Anspruch 1, wobei das Mittel einen Zwischenziffer- bzw. Zwischenwahlzeitmesser (500) und Mittel zum Entscheiden aufweist, das ein Wählsignal eine Endziffer der gewählten Nummer wiedergibt, wenn für eine vorbestimmte Zeitdauer keine Taste des Wählfeldes gedrückt wurde.

3. Funkverbindungssystem nach Anspruch 1, wobei das Mittel Mittel zum Zählen von Wählsignalen aufweist, die von dem Telefonapparat (5) gesendet werden.

4. Funkverbindungssystem nach den Ansprüchen 1 bis 3, wobei die Basisstation (3) Mittel zum Öffnen einer ankommenden Kommunikationsverbindung zwischen der Basisstation (3) und dem Teilnehmeranschluss (4) umfasst, wenn ein Wählsignal eine Endziffer der gewählten Telefonnummer wiedergibt.

## Revendications

1. Système d'accès comprenant :
un poste téléphonique (5) ;
un terminal d'abonné (4), connecté au dit poste téléphonique (5) ;
une station de base (3) pouvant être connectée au dit terminal d'abonné (4) par une liaison radio ;
une station de commande de station de base (2) pour commander ladite station de base (3) ; et
un central téléphonique (1) d'un système téléphonique connecté à ladite station de commande de station de base (2) ;
**caractérisé en ce que** lorsque ledit terminal d'abonné (4) détecte que le poste téléphonique (5) se trouve dans un état de décrochage, ledit terminal d'abonné est configuré pour envoyer une tonalité d'invitation à numéroter au poste téléphonique (5), établir une liaison radio entre ledit terminal d'abonné (4) et ladite station de base (3) ou ladite station de commande de station de base (2) afin de recevoir ensuite des signaux de numérotation, qui sont générés lorsque les touches d'un clavier numérique sur le poste téléphonique (5) sont enfoncées afin de composer un numéro de téléphone, et afin d'envoyer un signal de numérotation à ladite station de base (3) ou ladite station de commande de station de base (2) à chaque fois qu'une touche du clavier numérique du poste téléphonique (5) est enfoncée, pour composer un numéro de téléphone ;
ladite station de base (3) ou ledit terminal d'abonné (4) possédant un moyen pour déterminer si un signal de numérotation représente ou non un dernier chiffre du numéro de téléphone composé.

2. Système d'accès sans fil selon la revendication 1, dans lequel ledit moyen comprend un temporisateur interchiffres (500) et un moyen pour déterminer si un signal de numérotation représente un dernier chiffre du numéro composé si une touche du clavier numérique n'a pas été pressée pendant une période de temps prédéterminée.

3. Système d'accès radio selon la revendication 1, dans lequel ledit moyen comprend un moyen pour compter les signaux de numérotation envoyés depuis ledit poste téléphonique (5).

4. Système d'accès radio selon les revendications 1 à 3, dans lequel ladite station de base (3) comprend un moyen pour ouvrir une liaison de communication entrante entre la station de base (3) et ledit terminal d'abonné (4) si un signal de numérotation représente un dernier chiffre du numéro de téléphone composé.
